# EUROPÄISCHE PATENTANMELDUNG

(11) **EP 4 722 139 A1**
(43) Veröffentlichungstag der Anmeldung: **08.04.2026**
(21) Anmeldenummer: 25192155.7
(22) Anmeldetag: 28.07.2025
(51) Int. Cl.: B65H 31/30, H01M 10/04

(54) **WERKSTÜCKTRÄGER ZUM HALTEN EINES LOSEN ZELLSTAPELS, VERWENDUNG DESSELBEN, SOWIE ENTSPRECHENDES HANDLINGVERFAHREN**

(71) Anmelder: Grob-Werke GmbH & Co. KG, 87719 Mindelheim (DE)
(72) Erfinder: Pfitzmaier, Thomas, 86514 Ustersbach (DE)
(74) Vertreter: KASTEL Patentanwälte PartG mbB

(57) **Zusammenfassung**

Zur Verbesserung einer Handhabung von losen Zellstapeln (12) bei einer Herstellung von elektrischen Energiequellen wird ein Werkstückträger (14) zum Halten des losen Zellstapels (12) vorgeschlagen. Der Werkstückträger (14) ist mit einem ersten und einem zweiten plattenförmigen Element (16, 18), einem zwischen den plattenförmigen Elementen (16, 18) gebildeten Aufnahmebereich (20), einem Haltemechanismus (22), der seitlich versetzt zu dem Aufnahmebereich (20) angeordnet ist und dazu eingerichtet ist, das erste und das zweite plattenförmige Element (16, 18) relativ zueinander beweglich aneinander zu halten und mittels eines Kraftspeichers (28) zueinander zu spannen, und einem Öffnungsmechanismus (30) zum zerstörungsfreien Lösen des zweiten plattenförmigen Elements (18) von dem ersten plattenförmigen Element (16) versehen.

## Beschreibung

Die Erfindung betrifft einen Werkstückträger zum Halten eines losen Zellstapels im Zuge der Herstellung einer elektrischen Energiequelle. Weiter betrifft die Erfindung eine Anordnung umfassend einen losen Zellstapel und einen solchen Werkstückträger sowie eine bestimmungsgemäße Verwendung eines solchen Werkstückträgers. Weiter betrifft die Erfindung ein Handlingsverfahren zum Handeln eines losen Zellstapels unter Einsatz eines solchen Werkstückträgers.

Zum technologischen Hintergrund wird auf folgende Literaturstellen verwiesen, die Beispiele für Verfahren und Vorrichtungen auf dem Gebiet der Herstellung von elektrischen Energiequellen betreffen, wo lose Zellstapel gehandhabt werden:
[1] EP 4 002 533 B1
[2] WO 2022/128953 A1
[3] EP 4 152 452 B1
[4] EP 4 456 225 A1
[5] EP 4 560 752 A1

Die Erfindung hat sich zur Aufgabe gestellt, ein verbessertes Halten loser Zellstapel für eine Herstellung einer elektrischen Energiequelle zu ermöglichen.

Zum Lösen dieser Aufgabe schafft die Erfindung einen Werkstückträger nach Anspruch 1. Eine Anordnung umfassend einen solchen Werkstückträger und einen losen Zellstapel, eine Verwendung eines solchen Werkstückträgers sowie ein Handlingverfahren unter Einsatz eines solchen Werkstückträgers sind Gegenstand der weiteren unabhängigen Ansprüche.

Vorteilhafte Ausgestaltungen sind Gegenstand der Unteransprüche.

Die Erfindung schafft gemäß einem ersten Aspekt davon einen Werkstückträger zum Halten eines losen Zellstapels im Zuge der Herstellung einer elektrischen Energiequelle, mit einem ersten und einem zweiten plattenförmigen Element, einem zwischen den plattenförmigen Elementen gebildeten Aufnahmebereich für den Zellstapel, wobei der Aufnahmebereich auf einer ersten Breitseite durch das erste plattenförmige Element und auf der gegenüberliegenden zweiten Breitseite durch das zweite plattenförmige Element begrenzt ist, und einem Haltemechanismus. Der Haltemechanismus ist seitlich versetzt zu dem Aufnahmebereich angeordnet und dazu eingerichtet, das erste und das zweite plattenförmige Element relativ zueinander beweglich aneinander zu halten. Der Haltemechanismus weist einen Kraftspeicher zum Vorspannen des ersten und des zweiten plattenförmigen Elements in Bewegungsrichtung aufeinander zu, um den Zellstapel dazwischen zu klemmen, und einen Öffnungsmechanismus zum zerstörungsfreien Lösen des zweiten plattenförmigen Elements von dem ersten plattenförmigen Element auf.

Bei einigen Ausführungsformen ist das erste plattenförmige Element eine Grundplatte des Werkstückträgers. Bei einigen Ausführungsformen ist das erste plattenförmige Element ein in Draufsicht rechteckiges, plattenförmiges Element. Bei einigen Ausführungsformen ist das erste plattenförmige Element ein plattenförmiges Element mit einer Länge und Breite, die größer als die Länge und Breite des zu haltenden Zellstapels ist. Bei einigen Ausführungsformen ist das erste plattenförmige Element ein zumindest teilweise aus einem Metall, wie insbesondere Aluminium, gebildetes, plattenförmiges Element. Bei einigen Ausführungsformen ist das erste plattenförmige Element ein plattenförmiges Element, das zumindest teilweise aus einem Material gebildet ist, das relativ zu dem Material des Haltemechanismus eine höhere Wärmeleitfähigkeit aufweist. Bei einigen Ausführungsformen ist das erste plattenförmige Element ein zumindest teilweise aus einem nicht induktiv erwärmbaren Material gebildetes plattenförmiges Element. Bei einigen Ausführungsformen ist das erste plattenförmige Element ein zumindest teilweise aus Keramikwerkstoff und/oder aus elektrisch isolierendem Material gebildetes plattenförmiges Element. Bei einigen Ausführungsformen ist das erste plattenförmige Element ein plattenförmiges Element mit einer Temperaturbeständigkeit von etwa 80°C bis etwa 150°C, insbesondere von etwa 120°C. Bei einigen Ausführungsformen ist das erste plattenförmige Element ein plattenförmiges Element mit einer Antihaft-Beschichtung und/oder einer glatten Oberfläche. Bei einigen Ausführungsformen ist das erste plattenförmige Element eine Platte mit Abblasbohrungen. Bei einigen Ausführungsformen ist das erste plattenförmige Element ein plattenförmiges Element mit einer Dicke zwischen 1 mm und 5 mm, vorzugsweise 2,5 mm bis 3.5 mm. Bei einigen Ausführungsformen ist das erste plattenförmige Element ein plattenförmiges Element mit einer Kombination von Eigenschaften von einem oder mehreren der vorgenannten plattenförmigen Elemente.

Bei einigen Ausführungsformen ist das zweite plattenförmige Element ein Deckel des Werkstückträgers. Bei einigen Ausführungsformen ist das zweite plattenförmige Element eine Deckelplatte des Werkstückträgers. Bei einigen Ausführungsformen ist das zweite plattenförmige Element ein in Draufsicht rechteckiges plattenförmiges Element. Bei einigen Ausführungsformen ist das zweite plattenförmige Element ein plattenförmiges Element mit einer Länge und Breite, die größer als die Länge und Breite des zu haltenden Zellstapels ist. Bei einigen Ausführungsformen ist das zweite plattenförmige Element ein zumindest teilweise aus einem Metall, wie insbesondere Aluminium, gebildetes plattenförmiges Element. Bei einigen Ausführungsformen ist das zweite plattenförmige Element ein plattenförmiges Element, das zumindest teilweise aus einem Material gebildet ist, das relativ zu dem Material des Haltemechanismus eine höhere (Wärme-)Leitfähigkeit aufweist. Bei einigen Ausführungsformen ist das zweite plattenförmige Element ein zumindest teilweise aus einem nicht induktiv erwärmbaren Material gebildetes plattenförmiges Element. Bei einigen Ausführungsformen ist das zweite plattenförmige Element ein zumindest teilweise aus Keramikwerkstoff und/oder aus elektrisch isolierendem Material gebildetes plattenförmiges Element. Bei einigen Ausführungsformen ist das zweite plattenförmige Element ein plattenförmiges Element mit einer Temperaturbeständigkeit von etwa 80°C bis etwa 150°C, insbesondere von etwa 120°C. Bei einigen Ausführungsformen ist das zweite plattenförmige Element ein plattenförmiges Element mit einer Antihaft-Beschichtung und/oder einer glatten Oberfläche. Bei einigen Ausführungsformen ist das zweite plattenförmige Element eine Platte mit Abblasbohrungen. Bei einigen Ausführungsformen ist das zweite plattenförmige Element ein plattenförmiges Element mit einer Dicke zwischen 1 mm und 5 mm, vorzugsweise 2,5 mm bis 3.5 mm. Bei einigen Ausführungsformen ist das zweite plattenförmige Element ein plattenförmiges Element mit einer Kombination von Eigenschaften von einem oder mehreren der vorgenannten plattenförmigen Elemente.

Bei einigen Ausführungsformen ist vorgesehen, dass der Aufnahmebereich an allen Seiten eine größere Ausdehnung als der zu haltende Zellstapel hat.

Bei einigen Ausführungsformen ist vorgesehen, dass der Aufnahmebereich seitlich durch abgeschrägte Wände begrenzt ist, so dass er an dem zweiten plattenförmigen Element eine größere Breite als an dem ersten plattenförmigen Element hat.

Bei einigen Ausführungsformen ist vorgesehen, dass der Aufnahmebereich eine seitliche Platzreserve für einen Niederhaltefinger hat. Insbesondere hat der Aufnahmebereich eine seitliche Platzreserve für Niederhaltefinger zum Niederhalten seitlicher Vorsprungsausbildungen, insbesondere Ableiterfahnen, von Zellelementen des Zellstapels.

Bei einigen Ausführungsformen ist der Haltemechanismus dazu ausgebildet, unabhängig vom Abstand der plattenförmigen Elemente die Vorspannkraft zum Klemmen des Zellstapels konstant zu halten.

Bei einigen Ausführungsformen ist der Haltemechanismus dazu ausgebildet, eine Höhenänderung eines transportierten Stapels auszugleichen.

Bei einigen Ausführungsformen ist der Haltemechanismus dazu ausgebildet, eine Höhenänderung eines transportierten Stapels auszugleichen, indem eine über das zweite plattenförmige Element auf den Stapel ausgeübte Druckkraft höhenunabhängig konstant gehalten wird.

Insbesondere ist der Haltemechanismus so ausgelegt, dass er eine Höhenänderung des transportierten Stapels ausgleicht, vorzugsweise indem eine obere Platte - Beispiel für zweites plattenförmiges Element -, z.B. durch entsprechende Vorspannung, die Druckkraft auf den Stapel höhenunabhängig im Wesentlichen konstant hält.

Bei einigen Ausführungsformen weist der Haltemechanismus einen selbstjustierenden Begrenzungsanschlag auf. Vorzugsweise ist der selbstjustierende Begrenzungsanschlag mit wenigstens einer Schrägfläche versehen, über welche die Vorspannkraft des Kraftspeichers auf den transportierten Zellstapel übertragbar ist.

Vorteilhaft wird durch den Haltemechanismus eine Aufnahme von Stapeln mit unterschiedlichen Höhen und/oder Parallelitäten mit demselben Werkstückträger ermöglicht.

Vorteilhaft wird durch den Haltemechanismus ermöglicht, dass die obere Platte während des Transports "nachrückt", wenn sich die Höhe und/oder Parallelität des Stapels während des Transports ändert, z.B. durch "Setzen" des Stapels.

Vorteilhaft wird durch den Haltemechanismus eine Aufrechterhaltung der auf den Stapel ausgeübten Druckkraft während und/oder nach einer Lamination (Lamination sorgt für ein "Verdichten" des Stapels und somit eine Höhenreduzierung) ermöglicht.

Bei einigen Ausführungsformen ist vorgesehen, dass der Haltemechanismus ein erstes Seitenteil auf einer ersten Seite des Aufnahmebereichs und ein zweites Seitenteil auf einer der ersten Seite gegenüberliegenden zweiten Seite des Aufnahmebereichs hat.

Bei einigen Ausführungsformen ist vorgesehen, dass der Haltemechanismus vollständig zwischen dem ersten und dem zweiten plattenförmigen Element aufgenommen ist.

Bei einigen Ausführungsformen ist vorgesehen, dass der Haltemechanismus wenigstens ein mit dem ersten plattenförmigen Element zu verbindendes erstes Keilelement und wenigstens ein mit dem zweiten plattenförmigen Element zu verbindendes zweites Keilelement aufweist, wobei Keilflächen der Keilelemente durch den Kraftspeicher aufeinander zu gespannt sind.

Bei einigen Ausführungsformen ist vorgesehen, dass der Haltemechanismus wenigstens ein Paar erster Keilelemente, die derart mit dem ersten plattenförmigen Element verbindbar sind, dass ihre Keilflächen aufeinander zu gerichtet sind und wenigstens ein Paar zweiter Keilelemente, die derart mit dem zweiten plattenförmigen Element verbindbar sind, dass ihre Keilflächen voneinander weg gerichtet zwischen den Keilflächen der ersten Keilelemente angeordnet sind, wobei die ersten Keilelemente und/oder die zweiten Keilelemente unter Einwirkung der Vorspannkraft des Kraftspeichers relativ zueinander beweglich sind.

Bei einigen Ausführungsformen weist der Kraftspeicher des Haltemechanismus ein elastisches Element auf. Bei einigen Ausführungsformen weist der Kraftspeicher des Haltemechanismus eine mechanische Feder auf. Bei einigen Ausführungsformen weist der Kraftspeicher des Haltemechanismus eine Druckfeder auf. Bei einigen Ausführungsformen weist der Kraftspeicher des Haltemechanismus eine Schraubendruckfeder auf. Bei einigen Ausführungsformen weist der Kraftspeicher des Haltemechanismus eine Anordnung aus mehreren elastischen Elementen auf. Bei einigen Ausführungsformen weist der Kraftspeicher des Haltemechanismus eine Federanordnung auf.

Bei einigen Ausführungsformen ist vorgesehen, dass der Haltemechanismus eine Vorspannkrafteinstelleinrichtung zum Einstellen der Vorspannkraft aufweist.

Bei einigen Ausführungsformen ist vorgesehen, dass der Haltemechanismus eine variable Höhe aufweist, wobei die Mindesthöhe zwischen 2 mm und 20 mm, vorzugsweise zwischen 5 mm und 12 mm beträgt. Eine maximale Höhe kann bspw. 100 mm oder mehr betragen.

Bei einigen Ausführungsformen ist vorgesehen, dass der Haltemechanismus zumindest teilweise aus einem Material gebildet ist, das eine schlechtere Wärmeleitfähigkeit als das Material des ersten und/oder des zweiten plattenförmigen Elements hat.

Bei einigen Ausführungsformen ist vorgesehen, dass der Haltemechanismus zumindest teilweise aus Stahl gebildet ist.

Bei einigen Ausführungsformen ist der Öffnungsmechanismus dazu eingerichtet, eines oder mehrere der Keilelemente entgegen der Vorspannung durch den Kraftspeicher zu bewegen, um die Keilflächen voneinander zu lösen.

Gemäß einem weiteren Aspekt schafft die Erfindung eine Anordnung, umfassend einen losen Zellstapel und einen Werkstückträger nach einer der voranstehenden Ausgestaltungen zum Halten des Zellstapels.

Gemäß einem weiteren Aspekt schafft die Erfindung eine Verwendung eines oder mehrerer der Werkstückträger nach einer der voranstehenden Ausgestaltungen zum Halten von losen Zellstapeln im Zuge der Herstellung von elektrischen Energiequellen.

Bei einigen Ausführungen der Anordnung oder der Verwendung weist der jeweilige Zellstapel lose aufeinander gestapelte Zellelemente auf. Die Zellelemente können beispielsweise Batteriezellelemente, Monozellen, Halbzellen, Abschlusslagen, Elektroden, Separatoren, Kathoden und/oder Anoden sein oder aufweisen.

Gemäß einem weiteren Aspekt schafft die Erfindung ein Handlingverfahren zum Handeln (Handhaben) von losen Zellstapeln im Zuge der Herstellung von elektrischen Energiequellen, umfassend:
a) Bereitstellen eines oder mehrerer der Werkstückträger nach einer der voranstehenden Ausgestaltungen;
b) Einfügen des Zellstapels in den Aufnahmebereich bei von dem ersten plattenförmigen Element gelöstem zweiten plattenförmigen Element;
c) Zusammenfügen des ersten und des zweiten plattenförmigen Elements mittels des Haltemechanismus, so dass der Zellstapel dazwischen geklemmt wird;
d) Transportieren des Werkstückträgers mit darin aufgenommenem Zellstapel.

Bei einigen Ausführungsformen des Handlingsverfahrens umfasst Schritt b) den Schritt:
b1) positionsgenaues Ablegen des Zellstapels in dem Aufnahmebereich.

Bei einigen Ausführungsformen des Handlingsverfahrens umfasst Schritt b) den Schritt:
b2) positionsgenaues Ablegen von Zellelementen zum Bilden des Zellstapels in dem Aufnahmebereich.

Bei einigen Ausführungsformen des Handlingsverfahrens umfasst Schritt b) den Schritt:
b3) Ablegen des Zellstapels oder von Zellelementen davon mittels wenigstens eines Greifers und einem Kamerasystem.

Bei einigen Ausführungsformen des Handlingsverfahrens umfasst Schritt b) den Schritt:
b4) Erfassen von Position und/oder Ausrichtung des Zellstapels oder von Zellelementen mittels eines Kamerasystems, Vergleichen der Ist-Ausrichtung mit einer Soll-Ausrichtung und Korrektur auf die Soll-Ausrichtung und Ablegen des Zellstapels bzw. des Zellelements in dem Aufnahmebereich.

Bei einigen Ausführungsformen des Handlingsverfahrens umfasst Schritt b) den Schritt:
b5) Ablegen des Zellstapels oder eines Zelleelements davon, ohne dass Kanten seitliche Begrenzungen des Aufnahmebereichs berühren.

Bei einigen Ausführungsformen des Handlingsverfahrens umfasst Schritt b) den Schritt:
b6) Einfügen eines Zellstapels aus Zellelementen oder Aufstapeln von Zellelementen, wobei die Zellelemente aus der Gruppe ausgewählt sind, die Batteriezellelemente, Monozellen, Halbzellen, Abschlusslagen, Elektroden, Separatoren, Kathoden und Anoden umfasst.

Bei einigen Ausführungsformen des Handlingsverfahrens umfasst Schritt b) den Schritt:
b7) Einfügen des Zellstapels so, dass an Zellelementen ausgebildete Ableiterfahnen zugänglich sind.

Bei einigen Ausführungsformen des Handlingsverfahrens umfasst Schritt b) den Schritt:
b8) Einfügen des Zellstapels so, dass alle metallischen oder stromleitenden Teile des Werkstückträgers einen Mindestabstand zur Durchführung einer Hochspannungsprüfung, insbesondere von etwa 1 mm, zu elektrischen Anschlüssen an dem Zellstapel und/oder zu Prüfequipment zum Prüfen von elektrischen Eigenschaften des Zellstapels haben.

Bei einigen Ausführungsformen des Handlingsverfahrens umfasst Schritt c) den Schritt:
c1) Festhalten des Zellstapels über einen Kraftschluss zwischen den plattenförmigen Elementen.

Bei einigen Ausführungsformen des Handlingsverfahrens umfasst Schritt c) den Schritt:
c2) Festhalten des Zellstapels derart, dass keine Berührung von Kanten von Zellelementen des Zellstapels mit seitlichen Begrenzungen des Aufnahmebereichs stattfindet.

Bei einigen Ausführungsformen des Handlingsverfahrens umfasst Schritt c) den Schritt:
c3) Festhalten von Zellstapeln mit variabler Dicke.

Bei einigen Ausführungsformen des Handlingsverfahrens umfasst Schritt c) den Schritt:
c4) Aufbringen einer konstanten Druckkraft auf den Zellstapel, um die Fixierung des gesamten Zellstapels - insbesondere auch während Schritt d) - aufrechtzuerhalten.

Bei einigen Ausführungsformen des Handlingsverfahrens umfasst Schritt c) den Schritt:
c5) Ausgleichen von variablen Dicken von Zellstapel über den sich einstellenden Abstand zwischen den plattenförmigen Elementen.

Bei einigen Ausführungsformen des Handlingsverfahrens umfasst Schritt c) den Schritt:
c6) Ausrichten der plattenförmigen Elemente mit zueinander parallelen Druckflächen zum Ausgleich einer Parallelitäts-Toleranz.

Bei einigen Ausführungsformen des Handlingsverfahrens umfasst Schritt c) den Schritt:
c7) Aufnehmen des Zellstapels so, dass seine Ausrichtung von außerhalb des Werkstückträgers erfassbar und/oder erkennbar ist.

Bei einigen Ausführungsformen des Handlingsverfahrens umfasst Schritt c) den Schritt:
c8) Ausgleichen von Dickenschwankungen mittels des Haltemechanismus.

Bei einigen Ausführungsformen des Handlingsverfahrens umfasst Schritt c) den Schritt:
c9) Auferlegen einer Druckkraft von 0,5N pro mm² bis 1,5 N pro mm², vorzugsweise 1N/mm².

Bei einigen Ausführungsformen des Handlingsverfahrens umfasst Schritt d) den Schritt:
d1) Transportieren des Zellstapels in dem Werkstückträger von einer Zellstapelstation zu einer weiteren Station für einen nachfolgenden Prozess.

Bei einigen Ausführungsformen des Handlingsverfahrens umfasst Schritt d) den Schritt:
d2) Bewegen des Werkstückträgers mit dem Zellstapel zu einer Zellstapel-Laminiereinrichtung zum Laminieren des Zellstapels und/oder zu einer Heißpresse.

Bei einigen Ausführungsformen des Handlingsverfahrens umfasst Schritt d) den Schritt:
d3) Greifen des Werkstückträgers mit einem Übergabegreifer.

Bei einigen Ausführungsformen des Handlingsverfahrens umfasst Schritt d) den Schritt:
d4) Transportieren des Werkstückträgers mit Transportband und/oder auf einer Transportpalette.

Bei einigen Ausführungsformen umfasst das Handlingsverfahrens den weiteren Schritt:
e) Einfügen des Werkstückträgers in eine Laminierstation oder eine Heißpresse und Laminieren oder Heißpressen des Zellstapels, während er in dem Werkstückträger gehalten wird.

Bei einigen Ausführungsformen umfasst das Handlingsverfahrens die weiteren Schritte:
f) Öffnen des Werkstückträgers mittels des Öffnungsmechanismus und Entnehmen des, insbesondere laminierten, bspw. heißgepressten, Zellstapels aus dem Werkstückträger und
g) Reinigen des Werkstückträgers und Rückführen des Werkstückträgers zu Schritt a), um das Verfahren mit einem weiteren Zellstapel durchzuführen.

Einige Ausführungsformen der Erfindung betreffen einen Werkstückträger (WT) für den Zellstapel-Transfer. Insbesondere betreffen einige Ausführungsformen der Erfindung einen Werkstückträger für einen losen Zellstapel zum Transfer von einer Zellstapelung zu nachfolgenden Prozessen wie z. B. einer Zellstapel-Lamination. Der lose Zellstapel kann insbesondere aus losen, aufeinander gestapelten Monozellen, Halbzellen und/oder Abschlusslagen (z.B. S-A-S) oder aus anderen Zellelementen für die Herstellung einer elektrischen Energiequelle (z.B. Batterien, Brennstoffzellen, ...) aufgebaut sein.

Bei bisherigen Lösungen für einen Werkstückträger für lose Zellstapel wird der Zellstapel über einen Formschluss im Werkzeugträger mit seitlichen Führungen wie z.B. Rippen festgehalten. Die Zellstapelung erfolgte beispielsweise durch gleichzeitiges Einwerfen in den Werkzeugträger bei gleichzeitiger Rüttelbewegung des Werkzeugträgers.

Bei einigen der bisherigen Werkstückträger konnte zum einen eine geforderte Positionsgenauigkeit der Zellstapelung, insbesondere von etwa ± 0,3 mm Abweichung zwischen den Mittelpunkten der Halb- oder Monozellen, nicht erreicht werden. Zum anderen war eine Kantenbeschädigung durch ein Anstoßen von Elektroden/Separatoren an den Rüttelbacken teilweise nicht zu vermeiden. Insbesondere die Kanten einiger Zellstapelelemente sind empfindlich gegenüber mechanischer Belastung.

Mit Werkstückträgern gemäß einigen Ausführungsformen der Erfindung können die Zellelemente, wie z.B. Monozellen, positionsgenau in den Werkstückträger abgelegt werden, beispielsweise über eine Lösung mittels Greifer und Kamerasystem. Bei einigen Ausführungsformen werden dabei die Zellelemente, wie z.B. die Monozellen, einzeln durch einen Greifer gegriffen und zu einer Stapelposition transportiert. Auf dem Weg dorthin, insbesondere während der Bewegung, wird bei einigen Ausführungsformen die Ausrichtung des von dem Greifer gehaltenen Zellelements, z.B. Monozelle, durch ein Kamerasystem erfasst, mit einer Soll-Ausrichtung verglichen und gegebenenfalls auf die Soll-Ausrichtung korrigiert.

Der Zellstapel wird bei einigen vorteilhaften Ausführungsformen der Erfindung nicht über einen Formschluss - mit der eventuellen Gefahr der Beschädigung von Kanten durch mechanische Belastung - im Werkstückträger festgehalten, sondern über einen Kraftschluss zwischen einer Grundplatte und einem Deckel. Dabei findet vorzugsweise keine Berührung der Kanten der Zellelemente - z.B. Elektrodenkanten oder Separator-Überstände - statt, wodurch die Kanten nicht mechanisch belastet werden und somit eine Beschädigung der Kanten wie z.B. Elektrodenkanten oder Separator-Überständen minimiert oder gar ausgeschlossen werden.

Bevorzugte Ausgestaltungen betreffen einen Werkstückträger für eine vollautomatische Herstellung eines Zellstapels mit sehr kurzen Taktzeiten (~ 0,1-1,0 Sekunden pro zu stapelnder Monozelle), wobei der Werkstückträger einen losen Zellstapel in einer Stapelstation aufnehmen kann, um diesen auf einer vollautomatischen Verkettung zu nachfolgenden Prozessschritten zu transportieren.

Vorteilhafte Ausgestaltungen betreffen einen Werkstückträger mit einem einfachen Aufbau bei gleichzeitig hoher Robustheit. Damit wird die Zuverlässigkeit jedes einzelnen Werkstückträgers verbessert, Kosten sowie Wartungsaufwand (inkl. Stillstandzeiten etc.) werden reduziert. Somit ist der Werkstückträger insbesondere für Anwendungen geeignet, bei denen eine hohe Stückzahl an Werkstückträgern (z.B. ca. 100 - 200 Stück pro Anlage) benötigt wird, wie beispielsweise Werkstückträger im Laminationsprozess. Zudem wird bei einigen Ausführungsformen der Zellstapel direkt in dem Werkstückträger aufgebaut, d.h. der Zellstapel wird für verschiedene Nachfolgeprozesse, wie z.B. HiPot, Heißpressen etc., nicht aus dem Werkstückträger genommen.

Einige Ausführungsformen des Werkstückträgers erfüllen wenigstens eine, mehrere oder alle der folgenden allgemeinen Anforderungen:
- der Werkstückträger ist für Zellstapel mit variabler Dicke eingerichtet;
- der Werkstückträger ist zur Aufbringung einer konstanten Druckkraft auf den Zellstapel (auch während des Transports) zur Sicherstellung der Fixierung des gesamten Stapels eingerichtet;
- der Werkstückträger ist zum Ausgleich von Dickenschwankungen, z.B. durch Heißpressen, bei gleichzeitigem Aufrechterhalten der Druckkraft eingerichtet - z.B. können Rohmaterialdicken fertigungsbedingt minimal variieren; diese summieren sich im Stapel durch eine hohe Anzahl an Lagen auf; ein Endmaß der Stapel gleicher Anzahl soll nach Möglichkeit im Wesentlichen immer dasselbe sein;
- der Werkstückträger ist zum Ausgleich einer Parallelitäts-Toleranz des Zellstapels eingerichtet - insbesondere sind die Dicken der Rohmaterialien, z.B. Separator, Elektroden, fertigungsbedingt nicht immer über das gesamte Rohmaterial konstant; ein entsprechend "keilförmiges Rohmaterial" führt zu einem "keilförmigem" Zellstapel; hierbei ermöglicht der Werkstückträger eine im Wesentlichen konstante Kraftaufbringung über das gesamte Rohmaterial;
- der Werkstückträger ist für ca. 50.000 Zyklen für 2 Jahre Lebensdauer eingerichtet;
- der Werkstückträger erfüllt Anforderungen an technische Sauberkeit - der Werkstückträger ist leicht zu reinigen bzw. können Schmutzablagerungen, insbesondere nur schwer zu entfernende Schmutzablagerungen, vermieden werden;
- Formatflexibilität - der Werkstückträger kann flexibel auf verschiedene Formate angepasst werden , ohne die grundlegende Konstruktion verändern zu müssen;
- Indexierbarkeit (= Ausrichtung des Werkstückträgers erfassbar/erkennbar) an allen Prozessschritten und Übergabepunkten.

Bei einigen Ausführungsformen ist der Werkstückträger für mehrere Prozessschritte kompatibel; Beispiele hierfür sind:
- Zellstapelung
- Spannungsprüfung
- Lamination
- Übergabe in eine Station, z.B. in eine Heißpresse
- Heißpressen
- Übergabe an ein Transfersystem
- Übergabe des Zellstapels an nachfolgende Prozessstationen.

Im Folgenden werden vorteilhafte Ausgestaltungen und Merkmale bevorzugter Ausführungsformen des Werkstückträgers zur Verwendung in der Zellstapelung; erläutert.

Einige Ausführungsformen haben einen leicht abnehmbaren Deckel, insbesondere ist ein einfacher Öffnungsmechanismus vorgesehen.

Einige Ausführungsformen haben Platz für Monozellen-Niederhaltefinger (zum Niederhalten während des Stapelprozesses).

Bei einigen Ausführungsformen wird der Deckel mit Vorspannung für den losen Zellstapel appliziert. Die Zellelemente wie z.B. Monozellen sollen sich nicht verschieben; insbesondere beim Aufbringen des Deckels und unterwegs während des Transportes; beispielsweise werden Niederhaltefinger vorher vorsichtig entfernt.

Im Folgenden werden vorteilhafte Ausgestaltungen und Merkmale bevorzugter Ausführungsformen des Werkstückträgers zur Verwendung bei einer Spannungsprüfung (insbesondere NIO/IO Test, d.h. Test auf nicht in Ordnung/in Ordnung) erläutert. Einige Ausführungsformen haben hierzu eine gute Zugänglichkeit zu den Ableiterfahnen; die Ableiterfahnen sollen nicht vollständig verdeckt sein. Bei einigen Ausführungsformen sind Mindestabstände aller metallischen Teile des WT (mind. 1mm) zu Prüfequipment und Ableiterfahnen vorgesehen.

Zur Verwendung zur Übergabe in eine Heißpresse haben einige Ausführungsformen eine Schnittstelle für Übergabegreifer; der gesamte Werkzeugträger soll für den Übergabegreifer greifbar sein, um ihn vom Transportsystem in die Heißpresse zu transportieren. Das bedeutet, dass der zu pressende Stapel aus lose aufeinander gestapelten Schichten, der auf/in dem Werkstückträger angeordnet ist, zusammen mit dem Werkstückträger in die Heißpresse transportiert wird, und in dem Werkstückträger heißgepresst wird.

Im Folgenden werden vorteilhafte Ausgestaltungen und Merkmale bevorzugter Ausführungsformen des Werkstückträgers zur Verwendung beim Heißpressen erläutert.

Bei einigen Ausführungsformen ist der Werkzeugträger für schnelles Aufheizen und Abkühlen des Zellstapels eingerichtet.

Zum Beispiel hat der Werkstückträger für konventionelles Heißpressen eine hohe Wärmeleitfähigkeit der Grund- und Deckplatte bei gleichzeitig kleiner Dicke, beispielsweise aufweisend Aluminium, für guten Wärmetransport/-übergang in den Zellstapel. Bei einigen Ausführungsformen weisen die Seitenteile Stahl auf für erhöhte Verschleißfestigkeit, da in den Seitenteilen keine Wärmeleitfähigkeit erforderlich/gewünscht ist; der Idealfall wäre ein Material ohne Wärmeleitfähigkeit, damit keine Wärme zu den Seiten abwandert.

Zum Beispiel hat der Werkstückträger für induktives Heißpressen, bei dem keine induktive Erwärmung des Werkstückträgers erwünscht ist, eine Ausgewogenheit der Grund- und Deckplatte zwischen elektrischer Isolation und Wärmeleitfähigkeit, beispielsweise aufweisend Keramikwerkstoffe; der Idealfall wäre eine elektrische Isolation bei max. Wärmeleitfähigkeit. Bei einigen Ausführungsformen weisen die Seitenteile hinsichtlich Ausgewogenheit von Verschleißfestigkeit, mechanischer Festigkeit und Dichte der Seitenteile beispielsweise glasfaserverstärkten Kunststoff auf; der Idealfall wäre eine möglichst geringe Dichte, möglichst hohe Verschleißfestigkeit, möglichst hohe mechanische Festigkeit.

Beispielsweise ist der Werkstückträger zum Heißpressen für eine Presskraft von etwa -0,5N-1,5N, vorzugsweise von 1N/mm² (~25 kN bei einem Stapel 250 x 100 mm) eingerichtet. Insbesondere hat der Werkstückträger einen flachen Aufbau - vorzugsweise gibt es keine überstehenden Teile des Werkstückträgers unter der Grundplatte und über der Deckplatte.

Zum Heißpressen hat der Werkstückträger beispielsweise eine Temperatur-Kompatibilität bis 120°C. Hierzu ist der Werkstückträger mit entsprechender Materialbeständigkeit ausgerüstet. Die Längenausdehnung bei unterschiedlichen Materialien, z.B. Alu-Stahl-Kombination, sind bei der Montage, z.B. bei Schraubenverbindungen, zu beachten.

Da die Stapeldicke vor und nach dem Pressen variabel ist, ist bei einigen Ausführungsformen vorgesehen, dass der Deckel automatisch nachspannt, so dass beim Weitertransport der gepresste (dünnere) Zellstapel gehalten werden kann.

Zur Übergabe an das Transfersystem sind einige Ausführungsformen mit einer Schnittstelle für Übergabegreifer (siehe auch oben) versehen.

Zur Übergabe des Zellstapels an weitere Prozessschritte, die gesammelt auch alsBackend bezeichnet werden können, sind einige Ausführungsformen mit einem leicht abnehmbaren Deckel und einem einfachen Öffnungsmechanismus versehen. Für eine vorteilhafte Entnahme des laminierten Stapels sind die Werkstückträger vorteilhaft so ausgebildet, dass kein Anhaften des losen sowie des laminierten Stapels an Grund- und Deckplatte erfolgt. Weiter sind bei einigen Ausführungen Abblasbohrungen zur Unterstützung der Ablösung des Zellstapels vorgesehen.

Einige Ausführungsformen des Werkstückträgers sind für eine besonders leichte Reinigung ausgestaltet.

Bei bevorzugten Ausgestaltungen des Werkstückträgers ist ein Haltemechanismus seitlich des Zellstapels vorgesehen, dadurch ergibt sich ein für das Heißpressen erwünschter flacher Aufbau - z.B. bei einer Zellstapelhöhe von 10,5 mm ist die Gesamthöhe ca. 16,5 mm.

Bevorzugte Ausgestaltungen des Werkstückträgers haben wenigstens einen oder mehrere der folgenden Vorteile:
- Flacher Aufbau mit einer dünnen (z.B. 3 mm) Grund- und Deckplatte;
- Seitliche Platzreserve neben dem Zellstapel für Stapelfinger;
- Gut zu reinigender Innenraum (z.B. durch angeschrägte Wände);
- Der Zellstapel kann im Werkstückträger in der Heißpresse zwischen zwei Platten laminiert werden, da keine Bauteile des Werkstückträgers über die Grundplatte und den Deckel hinausragen.

Ausführungsbeispiele werden im Folgenden anhand der beigefügten Zeichnungen näher erläutert. Darin zeigt:
- Fig. 1: eine geschnittene Seitenansicht einer Anordnung, die einen Werkstückträger gemäß einer Ausführungsform und einen darin gehaltenen Zellstapel umfasst;
- Fig. 2: eine geschnittene Seitenansicht des Werkstückträgers zur Verdeutlichung seines mechanischen Aufbaus;
- Fig. 3: eine geschnittene Seitenansicht des Werkstückträgers in einer Stellung zum Halten eines Zellstapels von 10,5 mm Dicke (Zellstapelhöhe);
- Fig. 4: eine geschnittene Seitenansicht des Werkstückträgers in einer Stellung zum Halten eine Zellstapels mit einer Dicke von 12,5 mm;
- Fig. 5: eine geschnittene Seitenansicht des Werkstückträgers in einer geöffneten Stellung mit geöffnetem Öffnungsmechanismus;
- Fig. 6: eine geschnittene seitliche Explosionsdarstellung des Werkstückträgers zur Verdeutlichung der Entnahme eines zweiten plattenförmigen Elements, z.B. Deckel;
- Fig. 7: eine perspektivische Darstellung des Werkstückträgers zur Verdeutlichung einer Entriegelung bei Entnahme des zweiten plattenförmigen Elements;
- Fig. 8: eine perspektivische Darstellung eines ersten plattenförmigen Elements des Werkstückträgers mit Seitenteilen in einer Ansicht von unten, um die Befestigung des ersten plattenförmigen Elements zu verdeutlichen;
- Fig. 9: eine perspektivische Darstellung des ersten plattenförmigen Elements mit Seitenteilen in einer Ansicht von oben gesehen;
- Fig. 10: eine perspektivische Darstellung des zweiten plattenförmigen Elements in einer Ansicht auf dessen Unterseite, d.h. die dem Zellstapel zugewandte Seite;
- Fig. 11: eine perspektivische Darstellung des Werkstückträgers auf einer Palette für ein Transportsystem; und
- Fig. 12: eine perspektivische Darstellung eines Stapeltischs mit dem auf der Palette angeordneten Werkstückträger mit Greiferfingern (Niederhaltefingern).

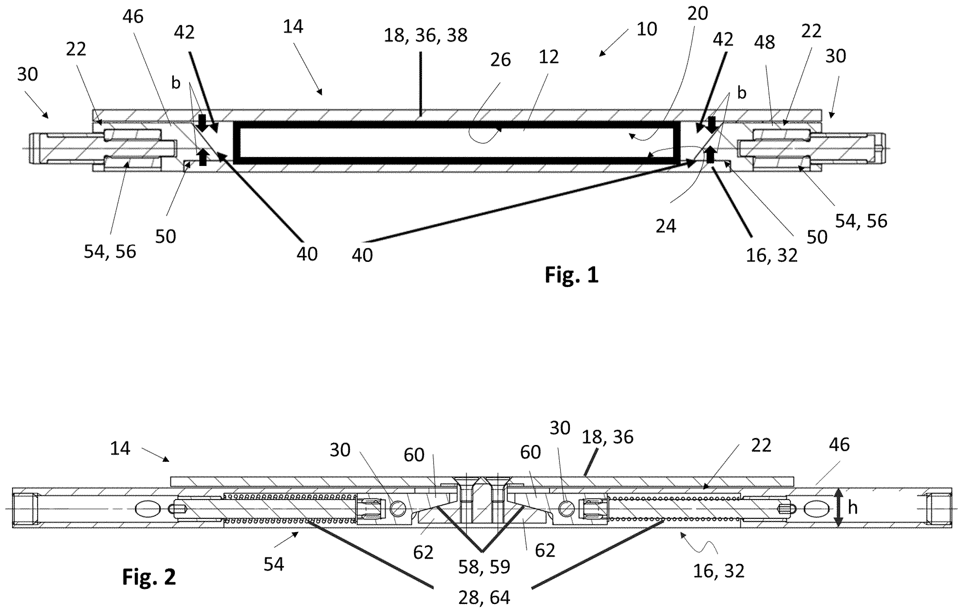

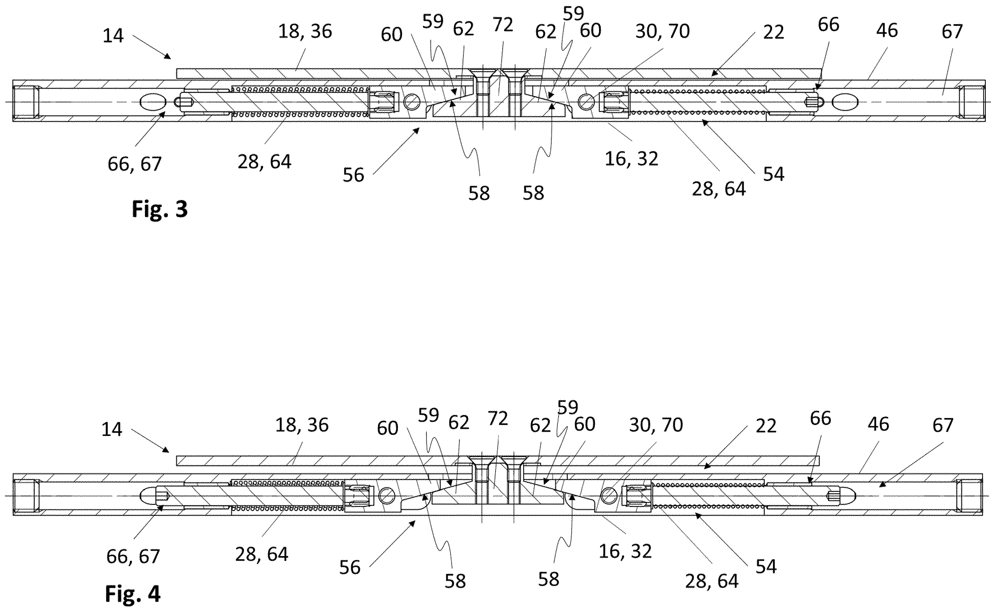

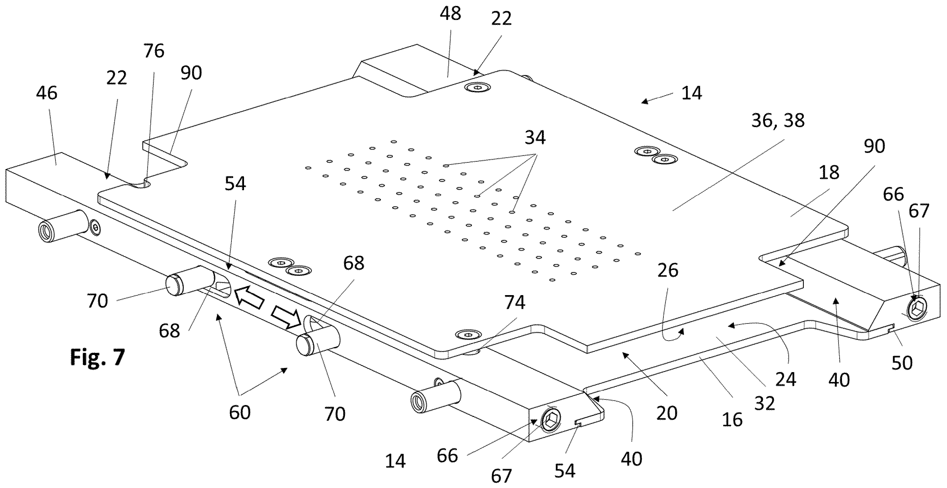

In Fig. 1 ist eine Anordnung 10 mit einem losen Zellstapel 12 und einem Werkstückträger 14 gemäß einer vorteilhaften Ausführungsform dargestellt. Der Werkstückträger 14 ist in unterschiedlichen Stellungen in den Fig. 2 bis 7 dargestellt.

Der Werkstückträger 14 ist zum Halten des losen Zellstapels 12 während der Herstellung einer elektrischen Energiequelle ausgebildet. Der Zellstapel 12 weist aufeinandergestapelte Zellelemente einer Zelle der elektrischen Energiequelle auf. Die lose aufeinander gestapelten Zellelemente sind beispielsweise Batteriezellelemente, Monozellen, Halbzellen, Abschlusslagen, Elektroden, Separatoren, Kathoden und/oder Anoden, oder andere zu stapelnde Zellelemente von elektrischen Energiequellen wie Batterien oder Brennstoffzellen.

Der Werkstückträger 14 weist ein erstes plattenförmiges Element 16, ein zweites plattenförmiges Element 18, einen zwischen den plattenförmigen Elementen 16, 18 gebildeten Aufnahmebereich 20 für den Zellstapel 12 und einen Haltemechanismus 22 auf.

Der Aufnahmebereich 20 ist auf einer ersten Breitseite 24 durch das erste plattenförmige Element 16 und auf der gegenüberliegenden zweiten Breitseite 26 durch das zweite plattenförmige Element 18 begrenzt.

Der Haltemechanismus 22 ist seitlich versetzt zu dem Aufnahmebereich 20 angeordnet und dazu eingerichtet, das erste plattenförmige Element 16 und das zweite plattenförmige Element 18 relativ zueinander beweglich aneinander zu halten. Der Haltemechanismus 22 weist einen Kraftspeicher 28 zum Vorspannen des ersten und des zweiten plattenförmigen Elements 16, 18 in Bewegungsrichtung b aufeinander zu auf, um den Zellstapel 12 dazwischen zu klemmen. Weiter weist der Haltemechanismus 22 einen Öffnungsmechanismus 30 zum zerstörungsfreien Lösen des zweiten plattenförmigen Elements 18 von dem ersten plattenförmigen Element 16 auf.

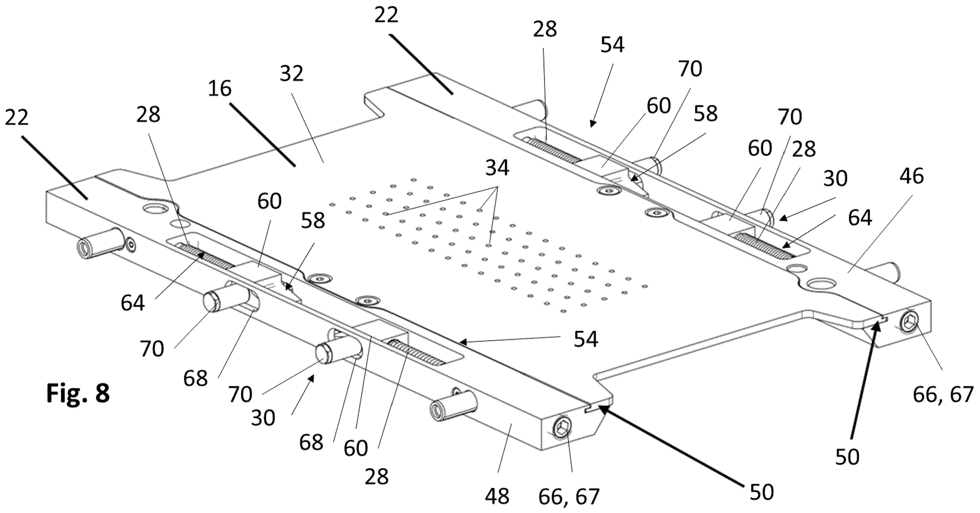

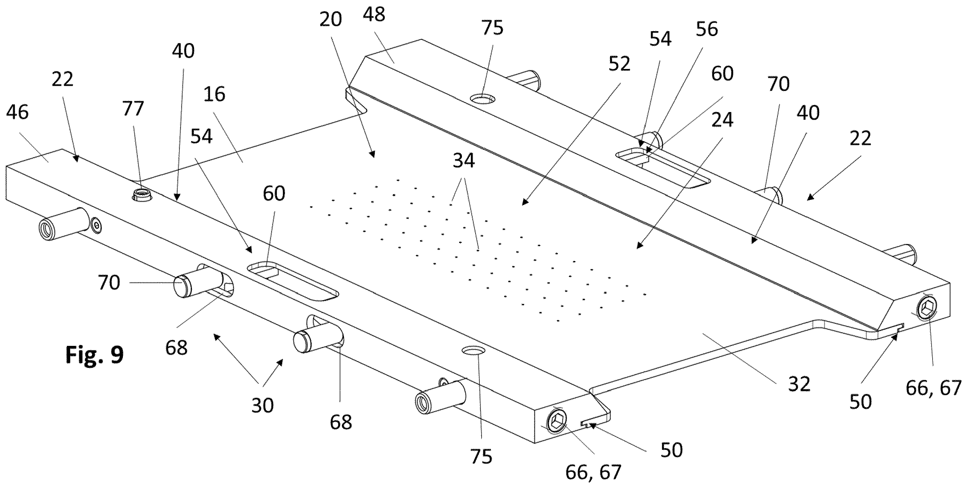

Das erste plattenförmige Element 16 ist in den Fig. 1 bis 7 in Kombination mit dem zweiten plattenförmigen Element 18 und dem Haltemechanismus 22 in dem Werkstückträger 14 dargestellt und zusammen mit Elementen des Haltemechanismus 22 in den Fig. 8 und 9 dargestellt.

Bei einigen Ausführungsformen ist das erste plattenförmige Element 16 als unteres plattenförmiges Element oder als Grundplatte 32 des Werkstückträgers 14 ausgebildet (siehe auch Fig. 8). Bei den dargestellten Ausführungen ist die Grundplatte 32 in Draufsicht im Wesentlichen rechteckig und hat eine Länge und Breite, die größer als die Länge und Breite des zu haltenden Zellstapels 12 ist. Die Grundplatte 32 ist bei den dargestellten Ausführungen zumindest teilweise aus einem Metall, wie insbesondere Aluminium, gebildet, um den Wärmedurchgang für ein konventionelles Heißpressen des Zellstapels 12 zu optimieren. Bei einem alternativen Laminieren des Zellstapels 12 wie z.B. induktivem Heißpressen kann das Material des ersten plattenförmigen Elements 16 durch andere Materialien ersetzt werden. Bei den dargestellten Ausführungsformen ist das beispielsweise als Grundplatte 32 ausgebildete plattenförmige Element 16 zumindest teilweise aus einem Material gebildet, das relativ zu dem Material des Haltemechanismus 22 eine höhere Wärmeleitfähigkeit aufweist. Bei einigen Ausführungsformen ist das beispielsweise als Grundplatte 32 ausgebildete erste plattenförmige Element 16 zumindest teilweise aus einem nicht induktiv erwärmbaren Material und/oder zumindest teilweise aus Keramikwerkstoff und/oder aus elektrisch isolierendem Material gebildet. Das Material der Grundplatte 32 wird bei einigen Ausführungsformen derart ausgewählt, dass die Grundplatte 32 eine Temperaturbeständigkeit von etwa 80°C bis etwa 150°C, insbesondere von etwa 120°C aufweist. Bei einigen Ausführungsformen ist das erste plattenförmige Element 16 mit einer Antihaft-Beschichtung und/oder einer glatten Oberfläche versehen. Weiter können, wie dargestellt, Abblasbohrungen 34 in dem ersten plattenförmigen Element 16 vorgesehen sein. Bei einigen Ausführungen hat das erste plattenförmige Element eine Dicke zwischen 1 mm und 5 mm, vorzugsweise 2,5 mm bis 3.5 mm.

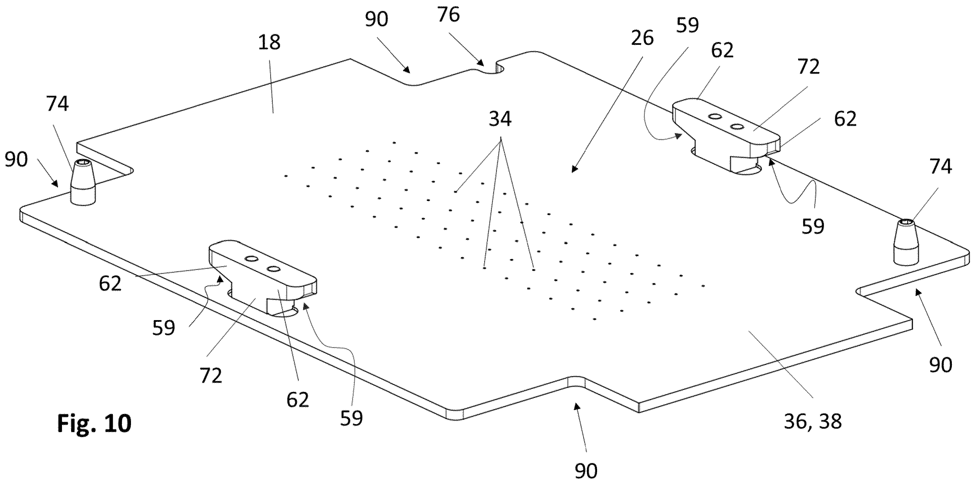

Das zweite plattenförmige Element 18 ist in Fig. 1 bis 7 in dem Werkstückträger 14 und in Fig. 10 alleine dargestellt.

Das zweite plattenförmige Element ist beispielsweise als oberes plattenförmiges Element oder als Deckel 36, insbesondere als Deckelplatte 38, des Werkstückträgers 14 ausgebildet. Auch das zweite plattenförmige Element 18 ist bei den dargestellten Ausführungen in Draufsicht im Wesentlichen rechteckig und hat eine Länge und Breite, die größer als die Länge und Breite des zu haltenden Zellstapels 12 ist. Auch der Deckel 36 ist bei den dargestellten Ausführungen zumindest teilweise aus einem Metall, wie insbesondere Aluminium, gebildet, um den Wärmedurchgang für ein konventionelles Heißpressen des Zellstapels 12 zu optimieren. Bei einem alternativen Laminieren des Zellstapels 12 wie z.B. induktivem Heißpressen kann auch das Material des zweiten plattenförmigen Elements 18 durch andere Materialien ersetzt werden. Bei den dargestellten Ausführungsformen ist das beispielsweise als Deckel 36 ausgebildete zweite plattenförmige Element 18 zumindest teilweise aus einem Material gebildet, das relativ zu dem Material des Haltemechanismus 22 eine höhere Wärmeleitfähigkeit aufweist. Bei einigen Ausführungsformen ist das beispielsweise als Deckel 36 ausgebildete zweite plattenförmige Element 18 zumindest teilweise aus einem nicht induktiv erwärmbaren Material und/oder zumindest teilweise aus Keramikwerkstoff und/oder aus elektrisch isolierendem Material gebildet. Auch das Material des Deckels 36 wird bei einigen Ausführungsformen derart ausgewählt, dass der Deckel 36 eine Temperaturbeständigkeit von etwa 80°C bis etwa 150°C, insbesondere von etwa 120°C aufweist. Bei einigen Ausführungsformen ist auch das zweite plattenförmige Element 18 mit einer Antihaft-Beschichtung und/oder einer glatten Oberfläche versehen. Weiter können, wie dargestellt, Abblasbohrungen 34 auch in dem zweiten plattenförmigen Element 18 vorgesehen sein. Bei einigen Ausführungen hat das zweite plattenförmige Element 18 eine Dicke zwischen 1 mm und 5 mm, vorzugsweise 2,5 mm bis 3.5 mm.

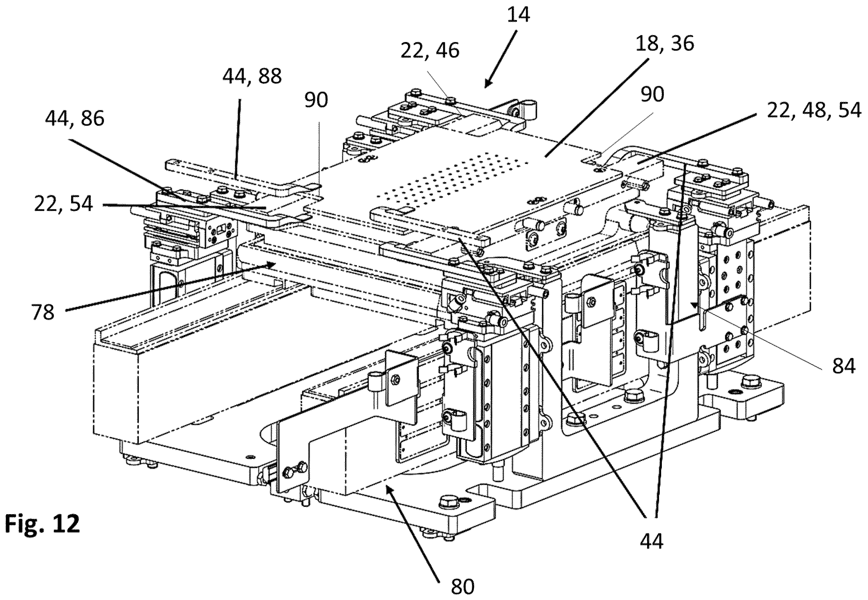

Im Folgenden wird der Aufnahmebereich 20 anhand der Darstellung in den Fig. 1, 7 und 9 erläutert. Der Aufnahmebereich 20 hat an allen Seiten eine größere Ausdehnung als der zu haltende Zellstapel 12. Seitlich ist der Aufnahmebereich 20 durch abgeschrägte Wände 40 begrenzt. Diese sind derart ausgebildet, dass der Aufnahmebereich 20 an dem oberen zweiten plattenförmigen Element 18 eine größere Breite als an dem unteren ersten plattenförmigen Element 16 hat. Weiter ist in dem Aufnahmebereich 20 eine seitliche Platzreserve 42 für einen Niederhaltefinger 44 (dargestellt in Fig. 12) hat.

Im Folgenden werden anhand der Darstellung der Fig. 1 bis 10 vorteilhafte Ausgestaltungen des Haltemechanismus 22 näher erläutert.

Bei einigen Ausführungsformen hat der Haltemechanismus 22 ein erstes Seitenteil 46 auf einer ersten Seite des Aufnahmebereichs 20 und ein zweites Seitenteil 48 auf einer der ersten Seite gegenüberliegenden zweiten Seite des Aufnahmebereichs 20. Die Seitenteile 46, 48 weisen auf den zu dem Aufnahmebereich 20 hin gewandten Seiten die abgeschrägten Wände 40 auf.

Bei den dargestellten Ausführungen sind die Seitenteile 46, 48 aus Verschleißgründen aus Stahl ausgeführt. Die Grundplatte 32 ist gemäß Fig. 8 nur mittig mit geeigneten Befestigern, wie z.B. Schrauben, mit den Seitenteilen 46, 48 verbunden und an den Enden über Nuten gehalten, um einen Längenausgleich zu ermöglichen. Die so gebildete Nutverbindung 50 erlaubt unterschiedliche Ausdehnungen der Grundplatte 32, die beispielsweise aus Aluminium oder einem Aluminiumwerkstoff gebildet ist, und den z.B. aus Stahl gebildeten Seitenteilen 46, 48 bei Erwärmung.

Durch die Kombination der Seitenteile 46, 48 mit der Grundplatte 32 ist an dem Werkstückträger 14 ein hinsichtlich technischer Sauberkeit ausgeführter Stapelplatz 52 ausgebildet, wo, wie in Fig. 9 gezeigt, bei abgenommenen Deckel 36 auch unmittelbar ein Stapeln der Zellelemente, wie z.B. Monozellen, erfolgen kann. Die abgeschrägten Wände 40 sind für eine einfache, insbesondere im Wesentlichen rückstandsfreie, Reinigung nach Gebrauch des Werkstückträgers 14 vorteilhaft, da sich durch die abgeschrägten Wände 40 im Übergang zur Grundplatte 32 ein Winkel von größer als 90° ergibt, und somit die "Ecken" an den Übergängen, z.B. mit einer Bürste, durch Ausblasen oder ähnlichem, leicht zu reinigen sind. Zusätzlich oder alternativ zu den abgeschrägten Wänden 40 können die "Ecken" auch abgerundet, d.h. mit Radien versehen sein, um die Reinigung zu vereinfachen.

Gemäß den Fig. 1 bis 11 ist der Haltemechanismus 22 vollständig zwischen dem ersten plattenförmigen Element 16 und dem zweiten plattenförmigen Element 18 aufgenommen. Die Mechanik hat bei den gezeigten Ausführungen in einer Bauhöhe h von etwa 10 mm Platz.

Der Haltemechanismus 22 hat einen sich selbst nachjustierenden Spannmechanismus 54 zum Auferlegen einer vorbestimmten Vorspannkraft auf den Zellstapel 12, um diesen klemmend zu halten.

Insbesondere weist der Haltemechanismus 22 einen selbstjustierenden Begrenzungsanschlag 56 mit wenigstens einer Schrägfläche - beispielsweise Keilfläche 58, 59 - auf, über welche die Vorspannkraft des Kraftspeichers 28 auf den transportierten Zellstapel 12 übertragbar ist.

Der nachjustierende Spannmechanismus 54 und dessen selbstjustierender Begrenzungsanschlag 56 können unterschiedlich ausgebildet sein.

Durch den nachjustierenden Spannmechanismus 54 ist der Haltemechanismus 22 dazu ausgebildet, unabhängig vom Abstand der plattenförmigen Elemente 16, 18 die Vorspannkraft zum Klemmen des Zellstapels 12 konstant zu halten. Insbesondere lässt sich so eine Höhenänderung eines transportierten Zellstapels 12 ausgleichen, wobei eine über das zweite plattenförmige Element 18 auf den Zellstapel 12 ausgeübte Druckkraft höhenunabhängig konstant gehalten wird.

Bei den dargestellten Ausführungsformen weist der Haltemechanismus 22 wenigstens ein mit dem ersten plattenförmigen Element 16 zu verbindendes erstes Keilelement 60 und wenigstens ein mit dem zweiten plattenförmigen Element 18 zu verbindendes zweites Keilelement 62 auf. Keilflächen 58, 59 der Keilelemente 60, 62 sind durch den Kraftspeicher 28 aufeinander zu gespannt.

Bei der konkret gezeigten Ausführung weist der Haltemechanismus 22 wenigstens ein Paar erster Keilelemente 60 auf, die derart mit dem ersten plattenförmigen Element verbindbar sind, dass ihre Keilflächen 58 aufeinander zu gerichtet sind. Weiter weist der Haltemechanismus 22 wenigstens ein Paar zweiter Keilelemente 62 auf, die derart mit dem zweiten plattenförmigen Element 18 verbindbar sind, dass ihre Keilflächen 59 voneinander weg gerichtet zwischen den Keilflächen 58 der ersten Keilelemente 60 angeordnet sind. Bei den dargestellten Ausführungen sind die ersten Keilelemente 60 unter Einwirkung der Vorspannkraft des Kraftspeichers 28 relativ zueinander beweglich ausgebildet. Bei anderen Ausführungen können aber auch die zweiten Keilelemente 62 unter Einwirkung des Kraftspeichers relativ zueinander beweglich ausgebildet sein.

Das Paar zweiter Keilelemente 62 ist, wie insbesondere aus Fig. 10 ersichtlich, bei der dargestellten Ausführung an den Enden eines einstückigen Doppelkeilkörpers 72 ausgebildet, der mittig mit dem Deckel 36 verschraubt ist und an dessen Unterseite vorsteht. Weiter sind an dem Deckel 36 Positionier- und Zentrierelemente, beispielsweise in Form von konischen Stiften 74 oder Einbuchtungen 76, vorgesehen, die in entsprechend komplementär ausgebildeter Konturen an den zugeordneten Seitenteilen 46, 48 eingreifen. Wie in Fig. 9 zu sehen, sind an den Seitenteilen 46, 48 als komplementäre Struktur zu dem jeweiligen konischen Stift 74 Zentrieröffnungen 75 ausgebildet, während an einem der Seitenteile 46 als komplementäre Struktur zu der Einbuchtung 76 ein konischer Vorsprung 77 vorgesehen ist. Somit ist der Deckel 36 leicht passgenau aufsetzbar und auch wieder entnehmbar.

Gemäß den Fig. 2 bis 6 und 8 ist der Kraftspeicher 28 des Haltemechanismus 22 vorzugsweise ein elastisches Element, wie insbesondere eine mechanische Feder, hier z.B. wenigstens eine Druckfeder 64, insbesondere Schraubendruckfeder, oder weist ein solches elastisches Element oder eine Anordnung aus mehreren solcher elastischen Elemente oder eine Federanordnung auf.

Weiter weist der Haltemechanismus 22 eine Vorspannkrafteinstelleinrichtung 66 zum Einstellen der Vorspannkraft auf. Beispielsweise ist die Vorspannkraft der Druckfedern 64 durch Einstellung der Lage ihres Federsitzes mittels Einstellschrauben 67 einstellbar.

Aufgrund des in den Fig. 1 bis 10 dargestellten nachjustierenden Spannmechanismus 54, beispielsweise mit Keilelementen 60, 62, weist der Haltemechanismus 22 eine variable Höhe auf, wobei die Mindesthöhe zwischen 5 mm und 20 mm, vorzugsweise zwischen 8 mm und 12 mm beträgt.

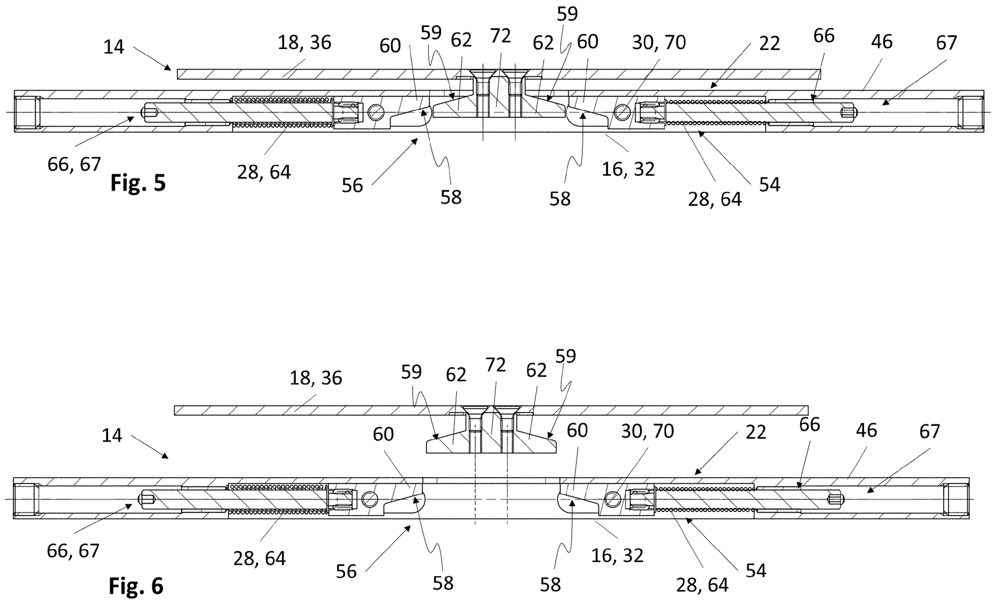

Der Öffnungsmechanismus 30 ist bei der dargestellten Ausgestaltung dazu eingerichtet, eines oder mehrere der Keilelemente 60, 62 entgegen der Vorspannung durch den Kraftspeicher 28 zu bewegen, um die Keilflächen 58, 59 voneinander zu lösen, wie dies in Fig. 5 bis 7 dargestellt ist. Beispielsweise sind die beweglichen Keilelemente 60 mit in Langlöchern 68 geführten Stiften 70 versehen und können so von außen manuell oder mit Hilfe eines automatischen Betätigungsmechanismus (nicht dargestellt, z.B. an einer Stapelstation/einem Greifer/Roboterarm ausgebildet) bewegt werden, um den Öffnungsmechanismus 30 zu öffnen und den Deckel 36 zu entnehmen.

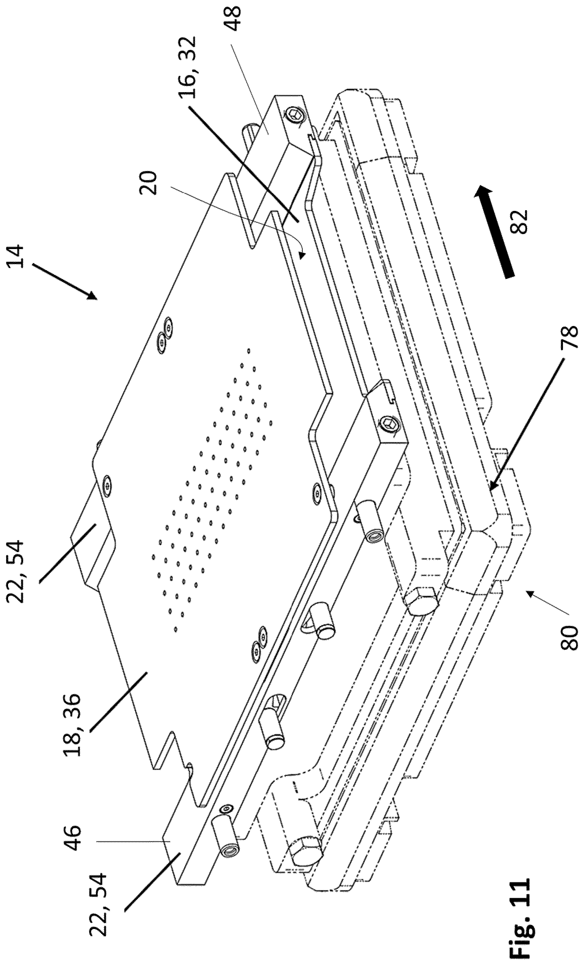

In Fig. 11 ist der Werkstückträger 14 auf einer Transportpalette 78 eines Transportsystems 80 dargestellt, das dazu eingerichtet ist, den Werkstückträger 14 mit darin gehaltenen Zellstapel 12 in Taktrichtung 82 von einem Stapelprozess zu Folgeprozessen, wie beispielsweise Laminieren und nachfolgendes Entnehmen des laminierten Zellstapels, zu transportieren. Der Werkstückträger 14 ist mit dem Deckel 36, der Grundplatte 32 und den Seitenteilen 46, 48 mit Spannmechanismus 54 dargestellt.

In Fig. 12 ist der Werkstückträger 14 auf der Transportpalette 78 an einer Stapelstation, insbesondere an einem Stapeltisch 84 mit Greiferfingern - Niederhaltefingern 44 -, dargestellt. Die Niederhalterfinger 44 sind in durchgezogenen Linien an einer unteren Position 86 dargestellt, wo sie die Zellelemente des Zellstapels 12 auf dem Stapelplatz 52 niederhalten und mit gestrichelten Linien in einer oberen Position 88 dargestellt, welche sie einnehmen, nachdem der Zellstapel 12 durch Aufsetzen des Deckels 36 in dem Werkstückhalter 14 über die Vorspannkraft eingespannt worden sind. Der Deckel 36 weist entsprechende Ausnehmungen 90 für die Niederhaltefinger 44 auf. Diese sind gemäß Fig. 10 bei der dargestellten Ausführung an den Ecken des Deckels 36 vorgesehen.

Im Folgenden wird anhand der Figuren eine mögliche Verwendung des Werkstückträgers 14 und sein bestimmungsgemäßer in einem Handlingverfahren zum Handeln (d.h. Handhaben) des losen Zellstapels 12 im Zuge der Herstellung der elektrischen Energiequelle näher erläutert.

Das Handlingverfahren umfasst die Schritte:
a) Bereitstellen eines oder mehrerer der Werkstückträger 14;
b) Einfügen des Zellstapels 12 in den Aufnahmebereich 20 bei von dem ersten plattenförmigen Element 16 gelöstem zweiten plattenförmigen Element 18;
c) Zusammenfügen des ersten und des zweiten plattenförmigen Elements 16, 18 mittels des Haltemechanismus 22, so dass der Zellstapel 12 dazwischen geklemmt wird; und
d) Transportieren des Werkstückträgers 14 mit darin aufgenommenem Zellstapel 12; sowie optional die Schritte:
e) Einfügen des Werkstückträgers 14 in eine Laminierstation (nicht dargestellt) oder eine Heißpresse (nicht dargestellt) und Laminieren oder Heißpressen des Zellstapels 12, während er in dem Werkstückträger 14 gehalten wird;
f) Öffnen des Werkstückträgers 14 mittels des Öffnungsmechanismus und Entnehmen des, insbesondere laminierten, bspw. heißgepressten, Zellstapels 12 aus dem Werkstückträger 14 und
g) Reinigen des Werkstückträgers 14 und Rückführen des Werkstückträgers 14 zu Schritt a), um das Verfahren mit einem weiteren Zellstapel 12 durchzuführen.

Schritt b) kann auf unterschiedliche Weise durchgeführt werden. Beispielsweise umfasst Schritt b) alternativ:
b1) positionsgenaues Ablegen des Zellstapels 12 in dem Aufnahmebereich 20 oder
b2) positionsgenaues Ablegen von Zellelementen zum Bilden des Zellstapels 12 in dem Aufnahmebereich.

Das Ablegen des Zellstapels 12 oder von Zellelementen davon erfolgt beispielsweise mittels wenigstens eines Greifers und einem Kamerasystem (nicht dargestellt). Dabei können Position und/oder Ausrichtung des Zellstapels 12 oder von Zellelementen mittels des Kamerasystems erfasst werden, die Ist-Ausrichtung mit einer Soll-Ausrichtung verglichen werden und die Ist-Ausrichtung auf die Soll-Ausrichtung korrigiert werden, um den Zellstapel 12 bzw. des Zellelements in dem Aufnahmebereich 20 abzulegen.

Das Ablegen des Zellstapels 12 oder eines Zelleelements davon erfolgt vorteilhaft, ohne dass Kanten seitliche Begrenzungen des Aufnahmebereichs 20 berühren.

Insbesondere wird der Zellstapel 12 so eingefügt, dass an Zellelementen ausgebildete Ableiterfahnen zugänglich sind. Somit kann im Werkstückträger 14 eine Funktionsprüfung des Zellstapels 12 durchgeführt werden. Insbesondere erfolgt das Ablegen derart, dass alle metallischen oder stromleitenden Teile des Werkstückträgers einen Mindestabstand von 1 mm zu elektrischen Anschlüssen an dem Zellstapel und/oder zu Prüfequipment zum Prüfen von elektrischen Eigenschaften des Zellstapels haben.

Zum Durchführen von Schritt c) wird der Zellstapel 12 vorzugsweise über einen Kraftschluss (und vorzugsweise insbesondere nicht über einen Formschluss) zwischen den plattenförmigen Elementen 16, 18 festgehalten. Das Festhalten des Zellstapels 12 erfolgt insbesondere derart, dass keine Berührung von Kanten von Zellelementen des Zellstapels 12 mit seitlichen Begrenzungen des Aufnahmebereichs 20 stattfindet. Es kann ein Festhalten von Zellstapeln 12 mit variabler Dicke erfolgen. Vorzugsweise wird eine konstante Druckkraft auf den Zellstapel 12 aufgebracht, um die Fixierung des gesamten Zellstapels 12 - insbesondere auch während Schritt d) - aufrechtzuerhalten. Ein Ausgleichen von variablen Dicken von Zellstapeln 12 kann über den sich einstellenden Abstand zwischen den plattenförmigen Elementen 16, 18 erfolgen. Beispielsweise aufgrund der Paare von Keilflächen 58, 59 erfolgt vorteilhaft ein Ausrichten der plattenförmigen Elemente 16, 18 mit zueinander parallelen Druckflächen. Dadurch kann auch eine Parallelitäts-Toleranz ausgeglichen werden. Das Aufnehmen des Zellstapels 12 erfolgt vorteilhaft so, dass seine Ausrichtung von außerhalb des Werkstückträgers 14 erfassbar und/oder erkennbar ist. Ein Ausgleichen von Dickenschwankungen kann mittels des Haltemechanismus 22 erfolgen. Bei einigen Ausführungen wird eine Druckkraft von 0,5 N/mm² bis 1,5 N/mm², vorzugsweise 1 N/mm² auferlegt.

Zum Durchführen von Schritt d) kann der Zellstapel 12 in dem Werkstückträger 14 von einer Zellstapelstation - beispielsweise mit Stapeltisch 84 siehe Fig. 12 - zu einer weiteren Station für einen nachfolgenden Prozess bewegt werden. Beispielsweise wird der Werkstückträger 14 mit dem Zellstapel 12 zu der Zellstapel-Laminiereinrichtung zum Laminieren des Zellstapels und/oder zu der Heißpresse transportiert. Das Transportieren kann durch Greifen des Werkstückträgers 14 mit einem Übergabegreifer (nicht dargestellt) und/oder mit einem Transportband und/oder auf der Transportpalette 78 erfolgen.

Dickenänderungen des Zellstapels 12 während des Transports oder den Folgeprozessen können über den Haltemechanismus 22 ausgeglichen werden, wobei vorteilhaft eine vordefinierte Haltekraft aufrecht erhalten bleibt.

Zur Verbesserung einer Handhabung von losen Zellstapeln 12 bei einer Herstellung von elektrischen Energiequellen ist ein Werkstückträger 14 zum Halten des losen Zellstapels 12 vorgeschlagen worden. Der Werkstückträger 14 ist mit einem ersten und einem zweiten plattenförmigen Element 16, 18, einem zwischen den plattenförmigen Elementen 16, 18 gebildeten Aufnahmebereich 20, einem Haltemechanismus 22, der seitlich versetzt zu dem Aufnahmebereich 20 angeordnet ist und dazu eingerichtet ist, das erste und das zweite plattenförmige Element 16, 18 relativ zueinander beweglich aneinander zu halten und mittels eines Kraftspeichers 28 zueinander zu spannen, und einem Öffnungsmechanismus 30 zum zerstörungsfreien Lösen des zweiten plattenförmigen Elements 18 von dem ersten plattenförmigen Element 16 versehen.

### Bezugszeichenliste:

- 10: Anordnung
- 12: Zellstapel
- 14: Werkstückträger
- 16: erstes plattenförmiges Element
- 18: zweites plattenförmiges Element
- 20: Aufnahmebereich
- 22: Haltemechanismus
- 24: erste Breitseite (Unterseite)
- 26: zweite Breitseite (Oberseite)
- 28: Kraftspeicher
- 30: Öffnungsmechanismus
- 32: Grundplatte
- 34: Abblasbohrung
- 36: Deckel
- 38: Deckelplatte
- 40: abgeschrägte Wand
- 42: Platzreserve
- 44: Niederhaltefinger
- 46: erstes Seitenteil
- 48: zweites Seitenteil
- 50: Nutverbindung
- 52: Stapelplatz
- 54: Spannmechanismus
- 56: Begrenzungsanschlag
- 58: Keilfläche (erstes Keilelement)
- 59: Keilfläche (zweites Keilelement)
- 60: erstes Keilelement
- 62: zweites Keilelement
- 64: Druckfeder
- 66: Vorspannkrafteinstelleinrichtung
- 67: Einstellschraube
- 68: Langloch
- 70: Stift
- 72: Doppelkeilkörper
- 74: konischer Stift
- 75: Zentrieröffnung
- 76: Einbuchtung
- 77: konischer Vorsprung
- 78: Transportpalette
- 80: Transportsystem
- 82: Taktrichtung
- 84: Stapeltisch
- 86: untere Position
- 88: obere Position
- 90: Ausnehmung
- b: Bewegungsrichtung (Vorspannung)
- h: Bauhöhe

## Patentansprüche

1. Werkstückträger (14) zum Halten eines losen Zellstapels (12) im Zuge der Herstellung einer elektrischen Energiequelle, mit einem ersten und einem zweiten plattenförmigen Element (16, 18), einem zwischen den plattenförmigen Elementen (16, 18) gebildeten Aufnahmebereich (20) für den Zellstapel (12), wobei der Aufnahmebereich (12) auf einer ersten Breitseite (24) durch das erste plattenförmige Element (16) und auf der gegenüberliegenden zweiten Breitseite (26) durch das zweite plattenförmige Element (18) begrenzt ist, und einem Haltemechanismus (22), der seitlich versetzt zu dem Aufnahmebereich (20) angeordnet ist und dazu eingerichtet ist, das erste und das zweite plattenförmige Element (16, 18) relativ zueinander beweglich aneinander zu halten, und einen Kraftspeicher (28) zum Vorspannen des ersten und des zweiten plattenförmigen Elements (16, 18) in Bewegungsrichtung aufeinander zu, um den Zellstapel (12) dazwischen zu klemmen, und einen Öffnungsmechanismus (30) zum zerstörungsfreien Lösen des zweiten plattenförmigen Elements (18) von dem ersten plattenförmigen Element (16) aufweist.

2. Werkstückträger (14) nach Anspruch 1, **dadurch gekennzeichnet**,
2.1 dass das erste plattenförmige Element (16) ausgewählt ist aus einer Gruppe von plattenförmigen Elementen, die eine Grundplatte (32) des Werkstückträgers (14), ein in Draufsicht rechteckiges, plattenförmiges Element, ein plattenförmiges Element mit einer Länge und Breite, die größer als die Länge und Breite des zu haltenden Zellstapels (12) ist, ein zumindest teilweise aus einem Metall, wie insbesondere Aluminium, gebildetes, plattenförmiges Element, ein plattenförmiges Element, das zumindest teilweise aus einem Material gebildet ist, das relativ zu dem Material des Haltemechanismus (22) eine höhere Wärmeleitfähigkeit aufweist, ein zumindest teilweise aus einem nicht induktiv erwärmbaren Material gebildetes plattenförmiges Element, ein zumindest teilweise aus Keramikwerkstoff und/oder aus elektrisch isolierendem Material gebildetes plattenförmiges Element, ein plattenförmiges Element mit einer Temperaturbeständigkeit von etwa 80°C bis etwa 150°C, insbesondere von etwa 120°C, ein plattenförmiges Element mit einer Antihaft-Beschichtung und/oder einer glatten Oberfläche und eine Platte mit Abblasbohrungen (34), ein plattenförmiges Element mit einer Dicke zwischen 1 mm und 5 mm, vorzugsweise 2,5 mm bis 3.5 mm sowie ein plattenförmiges Element mit einer Kombination von Eigenschaften von einem oder mehreren der vorgenannten plattenförmigen Elemente umfasst; und/oder
2.2 dass das zweite plattenförmige Element (18) ausgewählt ist aus einer Gruppe von plattenförmigen Elementen, die einen Deckel (36) des Werkstückträgers (14), eine Deckelplatte (38) des Werkstückträgers (14), ein in Draufsicht rechteckiges plattenförmiges Element, ein plattenförmiges Element mit einer Länge und Breite, die größer als die Länge und Breite des zu haltenden Zellstapels ist, ein zumindest teilweise aus einem Metall, wie insbesondere Aluminium, gebildetes plattenförmiges Element, ein plattenförmiges Element, das zumindest teilweise aus einem Material gebildet ist, das relativ zu dem Material des Haltemechanismus eine höhere Leitfähigkeit aufweist, ein zumindest teilweise aus einem nicht induktiv erwärmbaren Material gebildetes plattenförmiges Element, ein zumindest teilweise aus Keramikwerkstoff und/oder aus elektrisch isolierendem Material gebildetes plattenförmiges Element, ein plattenförmiges Element mit einer Temperaturbeständigkeit von etwa 80°C bis etwa 150°C, insbesondere von etwa 120°C, ein plattenförmiges Element mit einer Antihaft-Beschichtung und/oder einer glatten Oberfläche und eine Platte mit Abblasbohrungen (34), ein plattenförmiges Element mit einer Dicke zwischen 1 mm und 5 mm, vorzugsweise 2,5 mm bis 3.5 mm sowie ein plattenförmiges Element mit einer Kombination von Eigenschaften von einem oder mehreren der vorgenannten plattenförmigen Elemente umfasst.

3. Werkstückträger (14) nach einem der voranstehenden Ansprüche, **dadurch gekennzeichnet, dass** der Aufnahmebereich (20)
3.1 an allen Seiten eine größere Ausdehnung als der zu haltende Zellstapel (12) hat; und/oder
3.2 seitlich durch abgeschrägte Wände (40) begrenzt ist, so dass er an dem zweiten plattenförmigen Element (18) eine größere Breite als an dem ersten plattenförmigen Element (16) hat; und/oder
3.3 eine seitliche Platzreserve (42) für einen Niederhaltefinger (44) und/oder für seitliche Vorsprungsausbildungen, insbesondere Ableiterfahnen, von Zellelementen des Zellstapels (12) hat.

4. Werkstückträger (14) nach einem der voranstehenden Ansprüche, **dadurch gekennzeichnet, dass** der Haltemechanismus (22)
4.1 dazu ausgebildet ist, unabhängig vom Abstand der plattenförmigen Elemente (16, 18) die Vorspannkraft zum Klemmen des Zellstapels (12) konstant zu halten, und/oder
4.2 dazu ausgebildet ist, eine Höhenänderung eines transportierten Zellstapels (12) auszugleichen; und/oder
4.3 dazu ausgebildet ist, eine Höhenänderung eines transportierten Zellstapels (12) auszugleichen, indem eine über das zweite plattenförmige Element (18) auf den Zellstapel (12) ausgeübte Druckkraft höhenunabhängig konstant gehalten wird; und/oder
4.4 einen selbstjustierenden Begrenzungsanschlag (56) aufweist; und/oder
4.5 einen selbstjustierenden Begrenzungsanschlag (56) mit wenigstens einer Schrägfläche aufweist, über welche die Vorspannkraft des Kraftspeichers (28) auf den transportierten Zellstapel (12) übertragbar ist.

5. Werkstückträger (14) nach einem der voranstehenden Ansprüche, **dadurch gekennzeichnet, dass** der Haltemechanismus (22) wenigstens eines oder mehrere der folgenden Merkmale aufweist,
5.1 dass der Haltemechanismus (22) ein erstes Seitenteil (46) auf einer ersten Seite des Aufnahmebereichs (20) und ein zweites Seitenteil (48) auf einer der ersten Seite gegenüberliegenden zweiten Seite des Aufnahmebereichs (20) hat;
5.2 dass der Haltemechanismus (22) vollständig zwischen dem ersten und dem zweiten plattenförmigen Element (16, 18) aufgenommen ist;
5.3 dass der Haltemechanismus (22) wenigstens ein mit dem ersten plattenförmigen Element (16) zu verbindendes erstes Keilelement (60) und wenigstens ein mit dem zweiten plattenförmigen Element (18) zu verbindendes zweites Keilelement (62) aufweist, wobei Keilflächen (58, 59) der Keilelemente (60, 62) durch den Kraftspeicher (28) aufeinander zu gespannt sind;
5.4 dass der Haltemechanismus (22) wenigstens ein Paar erster Keilelemente (60), die derart mit dem ersten plattenförmigen Element (16) verbindbar sind, dass ihre Keilflächen (58) aufeinander zu gerichtet sind und wenigstens ein Paar zweiter Keilelemente (62), die derart mit dem zweiten plattenförmigen Element (18) verbindbar sind, dass ihre Keilflächen (59) voneinander weg gerichtet zwischen den Keilflächen (58) der ersten Keilelemente (60) angeordnet sind, wobei die ersten Keilelemente (60) und/oder die zweiten Keilelemente (62) unter Einwirkung der Vorspannkraft des Kraftspeichers (28) relativ zueinander beweglich sind;
5.5 dass der Kraftspeicher (28) des Haltemechanismus (22) aus der Gruppe ausgewählt ist, die ein elastisches Element, eine mechanische Feder, eine Druckfeder (64), eine Schraubendruckfeder, eine Anordnung aus mehreren elastischen Elementen und eine Federanordnung umfasst;
5.6 dass der Haltemechanismus (22) eine Vorspannkrafteinstelleinrichtung (66) zum Einstellen der Vorspannkraft aufweist;
5.7 dass der Haltemechanismus (22) eine variable Höhe aufweist, wobei die Mindesthöhe zwischen 5 mm und 20 mm, vorzugsweise zwischen 8 mm und 12 mm beträgt;
5.8 dass der Haltemechanismus (22) zumindest teilweise aus einem Material gebildet ist, das eine schlechtere Wärmeleitfähigkeit als das Material des ersten und/oder des zweiten plattenförmigen Elements (16, 18) hat;
5.9 dass der Haltemechanismus (22) zumindest teilweise aus Stahl gebildet ist.

6. Werkstückträger (14) nach Anspruch 5, Alternative 5.3 oder 5.4, **dadurch gekennzeichnet, dass** der Öffnungsmechanismus (30) dazu eingerichtet ist, eines oder mehrere der Keilelemente (60, 62) entgegen der Vorspannung durch den Kraftspeicher (28) zu bewegen, um die Keilflächen (58, 59) voneinander zu lösen.

7. Anordnung (10), umfassend einen losen Zellstapel (12) und einen Werkstückträger (14) nach einem der voranstehenden Ansprüche zum Halten des Zellstapels (12).

8. Verwendung eines oder mehrerer der Werkstückträger (14) nach einem der Ansprüche 1 bis 6 zum Halten von losen Zellstapeln (12) im Zuge der Herstellung von elektrischen Energiequellen.

9. Anordnung (10) nach Anspruch 7 oder Verwendung nach Anspruch 8, wobei der jeweilige Zellstapel (12) lose aufeinander gestapelte Zellelemente aus der Gruppe aufweist, die Batteriezellelemente, Monozellen, Halbzellen, Abschlusslagen, Elektroden, Separatoren, Kathoden und Anoden umfasst.

10. Handlingverfahren zum Handeln von losen Zellstapeln (12) im Zuge der Herstellung von elektrischen Energiequellen, umfassend:
a) Bereitstellen eines oder mehrerer der Werkstückträger (14) nach einem der Ansprüche 1 bis 6;
b) Einfügen des Zellstapels (12) in den Aufnahmebereich (20) bei von dem ersten plattenförmigen Element (16) gelöstem zweiten plattenförmigen Element (18);
c) Zusammenfügen des ersten und des zweiten plattenförmigen Elements (16, 18) mittels des Haltemechanismus (22), so dass der Zellstapel (12) dazwischen geklemmt wird;
d) Transportieren des Werkstückträgers (14) mit darin aufgenommenem Zellstapel (12).

11. Handlingverfahren nach Anspruch 10, **dadurch gekennzeichnet,**
**dass** Schritt b) wenigstens einen oder mehrere der Schritte umfasst:
b1) positionsgenaues Ablegen des Zellstapels (12) in dem Aufnahmebereich (20);
b2) positionsgenaues Ablegen von Zellelementen zum Bilden des Zellstapels (12) in dem Aufnahmebereich (20);
b3) Ablegen des Zellstapels (12) oder von Zellelementen davon mittels wenigstens eines Greifers und einem Kamerasystem;
b4) Erfassen von Position und/oder Ausrichtung des Zellstapels (12) oder von Zellelementen mittels eines Kamerasystems, Vergleichen der Ist-Ausrichtung mit einer Soll-Ausrichtung und
Korrektur auf die Soll-Ausrichtung und Ablegen des Zellstapels (12) bzw. des Zellelements in dem Aufnahmebereich (20);
b5) Ablegen des Zellstapels (12) oder eines Zelleelements davon, ohne dass Kanten seitliche Begrenzungen des Aufnahmebereichs (20) berühren;
b6) Einfügen eines Zellstapels (12) aus Zellelementen oder Aufstapeln von Zellelementen, wobei die Zellelemente aus der Gruppe ausgewählt sind, die Batteriezellelemente, Monozellen, Halbzellen, Abschlusslagen, Elektroden, Separatoren, Kathoden und Anoden umfasst;
b7) Einfügen des Zellstapels (12) so, dass an Zellelementen ausgebildete Ableiterfahnen zugänglich sind;
b8) Einfügen des Zellstapels (12) so, dass alle metallischen oder stromleitenden Teile des Werkstückträgers (14) einen Mindestabstand von 1 mm zu elektrischen Anschlüssen an dem Zellstapel (12) und/oder zu Prüfequipment zum Prüfen von elektrischen Eigenschaften des Zellstapels (12) haben.

12. Handlingverfahren nach Anspruch 10 oder 11, **dadurch gekennzeichnet,**
**dass** Schritt c) wenigstens einen oder mehrere der Schritte umfasst:
c1) Festhalten des Zellstapels (12) über einen Kraftschluss zwischen den plattenförmigen Elementen (16, 18);
c2) Festhalten des Zellstapels (12) derart, dass keine Berührung von Kanten von Zellelementen des Zellstapels (12) mit seitlichen Begrenzungen des Aufnahmebereichs (20) stattfindet;
c3) Festhalten von Zellstapeln (12) mit variabler Dicke;
c4) Aufbringen einer konstanten Druckkraft auf den Zellstapel (12), um die Fixierung des gesamten Zellstapels - insbesondere auch während Schritt d) - aufrechtzuerhalten;
c5) Ausgleichen von variablen Dicken von Zellstapeln (12) über den sich einstellenden Abstand zwischen den plattenförmigen Elementen (16, 18);
c6) Ausrichten der plattenförmigen Elemente (16, 18) mit zueinander parallelen Druckflächen zum Ausgleich einer Parallelitäts-Toleranz;
c7) Aufnehmen des Zellstapels (12) so, dass seine Ausrichtung von außerhalb des Werkstückträgers (14) erfassbar und/oder erkennbar ist;
c8) Ausgleichen von Dickenschwankungen mittels des Haltemechanismus (22);
c9) Auferlegen einer Druckkraft von 0,5N pro mm² bis 1,5 N pro mm², vorzugsweise 1N/mm².

13. Handlingverfahren nach einem der Ansprüche 10 bis 12, **dadurch gekennzeichnet,**
**dass** Schritt d) wenigstens einen oder mehrere der Schritte enthält:
d1) Transportieren des Zellstapels (12) in dem Werkstückträger (14) von einer Zellstapelstation zu einer weiteren Station für einen nachfolgenden Prozess;
d2) Bewegen des Werkstückträgers (14) mit dem Zellstapel (12) zu einer Zellstapel-Laminiereinrichtung zum Laminieren des Zellstapels (12) und/oder zu einer Heißpresse;
d3) Greifen des Werkstückträgers (14) mit einem Übergabegreifer;
d4) Transportieren des Werkstückträgers (14) mit Transportband und/oder auf einer Transportpalette (78).

14. Handlingverfahren nach einem der Ansprüche 10 bis 13, umfassend den weiteren Schritt:
e) Einfügen des Werkstückträgers in eine Laminierstation oder eine Heißpresse und Laminieren oder Heißpressen des Zellstapels, während er in dem Werkstückträger gehalten wird.

15. Handlingverfahren nach einem der Ansprüche 10 bis 14, umfassend die weiteren Schritte:
f) Öffnen des Werkstückträgers mittels des Öffnungsmechanismus und Entnehmen des, insbesondere laminierten, bspw. heißgepressten, Zellstapels aus dem Werkstückträger und
g) Reinigen des Werkstückträgers und Rückführen des Werkstückträgers zu Schritt a), um das Verfahren mit einem weiteren Zellstapel durchzuführen.
